# EUROPÄISCHE PATENTSCHRIFT

(11) **EP 2 899 332 B1**
(45) Veröffentlichungstag und Bekanntmachung des Hinweises auf die Patenterteilung: **30.03.2016**
(21) Anmeldenummer: 14152281.3
(22) Anmeldetag: 23.01.2014
(51) Int. Cl.: E04G 15/06

(54) **Verwendung einer Durchführung zum Einbau in einem Wand- oder Bodenelement**
Use of a feed-through for installation in a wall or floor element
Utilisation d'un passage encastrable dans un élément de mur ou de sol

(43) Veröffentlichungstag der Anmeldung: 29.07.2015
(73) Patentinhaber: Hauff-Technik GmbH & Co. KG, 89568 Hermaringen (DE)
(72) Erfinder: Kurz, Ralf, 89537 Giengen (DE)
(74) Vertreter: Szynka, Dirk

(56) Entgegenhaltungen:
- WO-A1-2007/082364
- DE-U1- 29 922 263
- GB-A- 2 450 700
- US-A- 5 405 119

## Beschreibung

Die vorliegende Erfindung betrifft die Verwendung einer zum Einbau in ein Wand- oder Bodenelement vorgesehene Durchführung mit einem Rohrelement, durch welches eine Leitung hindurchführbar ist.

Im Stand der Technik werden etwa im Falle sogenannter Schachtfutter Rohrelemente aus Faserzement vorgesehen, die dann nach dem Vergießen mit beispielsweise Beton in einem Wand- oder Bodenelement eine Durchgangsöffnung freihalten. Durch diese kann anschließend eine Leitung geführt und gegen das Rohrelement gedichtet werden. Andere Entwicklungen gehen dahin, die Rohrelemente aus Faserzement durch Rohrelemente aus Metall oder auch Kunststoffmaterial zu ersetzen.

Die WO 2007/082364 A1 betrifft eine Durchführung mit einem Rohrelement aus zwei ineinander verschiebbaren Hülsen, die mittels Formschlusselementen in unterschiedlichen Relativpositionen arretierbar sind.

Die US 5,405,119 A betrifft ebenfalls eine Durchführung mit zwei ineinander verschiebbaren Hülsen, wobei auf der inneren der beiden Hülsen eine Spannschelle angeordnet ist, welche für das Aufschieben der äußeren Hülse einen Anschlag darstellt. Ein Gummiband zieht die äußere Hülse in diesen Anschlag.

Die GB 2 450 700 A betrifft eine längenverstellbare Wasserleitung mit einer Kombination aus Hülse und Mutter zur Arretierung der Längenverstellbarkeit.

Die DE 299 22 263 U1 betrifft einen Aussparungskörper für Betondecken, wobei ein Ober- und ein Unterkasten ineinander verschiebbar geführt sind und zur Arretierung beispielsweise miteinander verschraubt werden.

Der vorliegenden Erfindung liegt die Aufgabe zugrunde, eine für die Verwendung einer längeriverstellbaren Durchführung vorteilhafte Arretiermöglichkeit anzugeben.

Erfindungsgemäß löst diese Aufgabe eine Durchführung der Verwendung nach Anspruch 1.

Bevorzugte Ausführungsformen finden sich in den abhängigen Ansprüchen und der nachstehenden Beschreibung, wobei nicht immer im Einzelnen zwischen der Durchführung und deren Verwendung unterschieden wird; die Offenbarung ist zumindest implizit hinsichtlich sämtlicher Anspruchskategorien zu lesen.

Das Rohrelement der erfindungsgemäßen Durchführung ist also in seiner Länge einstellbar, wobei diese Einstellbarkeit arretierbar ist. Der Erfinder hat festgestellt, dass erst die Arretierungsfunktion die Längeneinstellbarkeit tatsächlich praktisch interessant macht. Eine allein lähgeneinstellbare Durchführung kann nämlich beispielsweise insoweit nachteilig sein, als beim Vergießen in Beton teils erhebliche Kräfte auf das Rohrelement wirken können; ohne Arretierungsvorrichtung können die Rohrelementteilstücke dabei ungewollt zueinander versetzt werden, was letztlich zu einer Undichtigkeit führen kann. Später kann dann z. B. entlang der Außenseite des Rohrelements kriechendes Wasser eindringen.

Die Arretierungsvorrichtung kann auch die Handhabung der Durchführung vereinfachen, beispielsweise wenn diese an einer Schalung montiert wird. Es kann dann nämlich beispielsweise das eine Ende des Rohrelements an einem Schalungselement befestigt und dann die Länge des Rohrelements eingestellt und arretiert werden, wobei die Durchführung bereits vor einer Befestigung am gegenüberliegenden Schalungselement einigermaßen stabilisiert ist. Die Rohrelementteilstücke verrutschen also nicht relativ zueinander, und es ist somit insbesondere die Gefahr verringert, dass eines davon abfällt und Schaden nimmt.

Die Rohrelementteilstücke sind relativ zueinander in Leitungsrichtung derart versetzbar, dass sie verschiedene, jeweils einer anderen Rohrelementlänge entsprechende Relativpostionen einnehmen können. Die Länge des Rohrelements wird in Leitungsrichtung von seinem einen zum entgegengesetzten Ende genommen (ist beispielsweise ein Ende angeschrägt, ist die "Länge" der Mittelwert aller Längen). Dabei ist eine Versetzbarkeit im Sinne dieser Erfindung nur gegeben, wenn sich dadurch die Länge des Rohrelements ändert; wird ein kürzeres, in ein längeres vollständig eingeschobenes Rohrelementteilstück darin verschoben, ist dies insoweit kein Versetzen. Das Versetzen der Rohrelementteilstücke erfolgt vorzugsweise allein in Leitungsrichtung, wobei die Rohrrichtung eines jeden Rohrelementteilstücks parallel zur Leitungsrichtung liegt.

Das aus den beiden Rohrelementteilstücken aufgebaute Rohrelement ist bei einer bevorzugten Durchführung um mindestens ein weiteres Montage-Rohrelement ergänzt, an dem weiter bevorzugt Befestigungselemente zur Befestigung an einer Schalung und/oder anderen Durchführungen vorgesehen sind. Besonders bevorzugt ist ein solches Befestigungselement bezogen auf die Leitungsrichtung endseitig des Montage-Rohrelements vorgesehen, beispielsweise als sich in Abstandsrichtung erstreckende Flanschplatte. Dabei kann die Flanschplatte selbst der Befestigung an einer Schalung dienen, beispielsweise damit verschraubt oder vernagelt werden. Die "Abstandsrichtung" ist die den Abstand zur Mittenachse der Leitung bestimmende Richtung, die im Falle einer Kreisförm der radialen Richtung entspricht (so wie die Leitungsrichtung der axialen Richtung entspricht).

An dem Befestigungselement ist ferner vorzugsweise ein Formschlusselement vorgesehen, über welches die Durchführung mit einer weiteren verbindbar ist. Das Formschlusselement ist dabei weiter bevorzugt doppelt vorgesehen, nämlich als erstes und dazu komplementäres zweites Formschlusselement, wobei beim Zusammensetzen zweier Durchführungen dann das erste Formschlusselement der einen Durchführung einen Formschluss mit dem zweiten Formschlusselement der anderen Durchführung bildet und umgekehrt. Die Formschlusselemente können Nut- und Feder-artig ineinander greifen, vorzugsweise mit einer Hinterschneidung.

In Leitungsrichtung gesehen hat das Befestigungselement (die Flanschplatte) vorzugsweise eine polygonförmige Außenkontur, sodass das Befestigungselement mit entsprechend polygonförmigen Befestigungselementen weiterer Durchführungen sich flächig ergänzend zusammenbaubar ist. Bevorzugt ist eine im Wesentlichen rechteckförmige, insbesondere quadratische, Außenkontur.

Das erste und das zweite Rohrelementteilstück und, soweit vorgesehen, ein Montage-Rohrelement werden üblicherweise jeweils eine in Leitungsrichtung genommene Länge von mindestens 5 cm, 10 cm bzw. 15 cm haben; mögliche Obergrenzen können bei 100 cm, 75 cm bzw. 50 cm liegen. Mögliche Innendurchmesser können beispielsweise bei mindestens 5 cm bzw. 7,5 cm und bei höchstens 50 cm, 30 cm bzw. 20 cm liegen.

Der Begriff "Durchführung" bezieht sich auf derart zusammengesetzte Rohrelementteilstücke, dass das resultierende Rohrelement im Rahmen des technisch Üblichen dicht gegenüber flüssigem Beton bzw. Wasser ist und eine Leitung hindurchgeführt werden kann.

Erfindungsgemäß nimmt das zweite Rohrelementteilstück das erste auf, ist letzteres also verschiebbar im zweiten Rohrelementteilstück geführt. Es kann also beispielsweise eine Außenwandfläche des ersten Rohrelementteilstücks bereichsweise an einer Innenwandfläche des zweiten Rohrelementteilstücks anliegen, nämlich im Wesentlichen bis zur Einschiebetiefe. Auch aus praktischen Gründen kann die Führung dabei ein gewisses Spiel hinsichtlich der Abstandsrichtung haben.

Erfindungsgemäß sind zwei für sich jeweils einstückige, dann ineinander geführte Rohrelementteilstücke vorgesehen.

Die Arretierungsvorrichtung blockiert die Versetzbarkeit (insbesondere eine eben beschriebene Verschiebbarkeit), was im Rahmen dieser Offenbarung als "zumindest teilweises" Blockieren zu verstehen ist, also jedenfalls bis zum Aufbringen einer bestimmten Mindestkraft, die größer als die für das Versetzen/Verschieben ansonsten aufzubringende Kraft ist. Eine in Leitungsrichtung wirkende Mindestkraft zum Überwinden der Arretierungsvorrichtung kann beispielsweise mindestens das 2-, 4-, 6-, 8- bzw. 10-fache der während des Versetzens/Verschiebens in Leitungsrichtung aufzubringenden Kraft betragen. Dies soll dabei vorzugsweise jeweils für beide Leitungsrichtungen gelten, also für Verlängern und Verkürzen; das Blockieren bezieht sich nämlich generell bevorzugt auf beide Leitungsrichtungen.

Wie auch aus den Ausführungsbeispielen näher deutlich wird, kann eine Arretierung in vordefinierten Relativpositionen oder auch stufenlos, also in beliebig vielen Relativpositionen, erfolgen. Von den arretierbaren Relativpositionen sollen mindestens 3 vorgesehen sein, vorzugsweise mindestens 5 und weiter bevorzugt mindestens 10 (was sowohl auf vordefinierte als auch stufenlos erreichbare Relativpositionen zu lesen ist).

Bei einer erfindungsgemäßen Ausführungsform, mit der sich insbesondere auch eine stufenfose Arretierbarkeit realisieren lässt, ist ein Spannring zur Arretierung vorgesehen, der in eine Spannposition gebracht die Relativposition von erstem und zweitem Rohrelementteilstück festlegt, nämlich das zweite auf das erste Rohrelementteilstück spannt, also andrückt. Der Spannring ist in der Spannposition also außenseitig auf dem zweiten Rohrelementteilstück angeordnet und drückt dieses nach innen. (Ohne gegenteilige Angabe beziehen sich die Angaben "innen" und "außen" im Rahmen dieser Offenbarung auf die Abstandrichtung.)

Bei einer bevorzugten Ausführungsform kann der Spannring durch eine Schraubbewegung in die Spannposition gebracht werden, ist also durch ein außenseitiges Lager am ersten und/oder zweiten Rohrelementteilstück, vorzugsweise allein am zweiten Rohrelementteilstück, derart geführt, dass durch Drehen des Spannrings in Umlaufrichtung ein Versatz in Leitungsrichtung erfolgt. Mit zunehmendem Versatz in Leitungsrichtung kann beispielsweise das zweite Rohrelementteilstück zunehmend nach innen auf das erste Rohrelementteilstück gespannt werden, etwa im Falle eines nachstehend erläuterten zweiten Rohrelementteilstücks mit nach außen geneigter Außenfläche.

Dazu kann beispielsweise außenseitig an dem beziehungsweise den Rohrelementteilstück(en) oder innenseitig am Spannring, vorzugsweise an Spannring und Rohrelementteilstücken beziehungsweise insbesondere zweitem Rohrelementteilstück, ein Gewindeabschnitt vorgesehen sein. Bezogen auf die Umlaufrichtung (die Drehrichtung) sind vorzugsweise eine Mehrzahl Gewindeabschnitte vorgesehen, die sich jeweils in Umlaufrichtung über einen Winkelbereich von beispielsweise mindestens 10°, vorzugsweise mindestens 20°, und (von der Untergrenze unabhängig) über höchstens 180°, vorzugsweise höchstens 120°, erstrecken. Bezogen auf die Leitungsrichtung liegt ein solcher jeweiliger Gewindeabschnitt in dem Winkelbereich am entsprechenden Teil (Spannring oder Rohrelementteilstück) dann vorzugsweise als jeweils einziger Gewindeabschnitt vor.

Bevorzugt sind ein Gewindeabschnitt am Spannring und ein dazu komplementärer Gewindeabschnitt am Rohrelementteilstück (vorzugsweise am zweiten), die ineinander greifen; besonders bevorzugt ist wie gesagt eine Mehrzahl solcher über den Umlauf verteilter ineinander greifender Gewindeabschnitt-Paare: Im Allgemeinen könnte die "Schraubführung" indes auch bloß ein Zapfen beziehungsweise eine Erhebung ohne Gewindeform am einen Teil sein, die im Zusammenwirken mit einem Gewindeabschnitt am anderen Teil eine Schraubführung ergibt.

Generell kann für den mit einer Schraubbewegung in die Spannposition bringbaren Spannring auch eine zusätzliche Arretierung vorgesehen sein, etwa nach Art eines Bajonettverschlusses; die Drehbewegung wäre dann also in der Spannposition arretiert und könnte beispielsweise durch Drücken in Leitungsrichtung (entgegen der Richtung, in welcher sich der Spannring dann beim Lösen bewegt) gelöst werden.

Bei einer anderen bevorzugten Ausgestaltung des außenseitig am zweiten Rohrelementteilstück verschiebbar geführten Spannrings lässt sich dieser durch eine Bewegung allein in Leitungsrichtung in die Spannposition bringen (es ist also keine Schraubbewegung mit nur einer Bewegungskomponente in Leitungsrichtung erforderlich). So lassen sich Handhabung und auch Gestaltung des Spannrings vereinfachen; auch in Kostenhinsicht kann ein einfacher, in sich geschlossener, in Umlaufrichtung durchgehender Ring bevorzugt sein.

In bevorzugter Ausgestaltung ist die Außenfläche des zweiten Rohrelementteilstücks in einem Spannabschnitt nach außen geneigt, ist der Spannabschnitt also beispielsweise zumindest abschnittsweise oder auch vollständig kegelstumpfförmig vorgesehen. Wird der Spannring in die Spannposition geschoben, wird dieser Spannabschnitt infolge der Neigung zunehmend nach innen gespannt, also in Richtung der Außenfläche des ersten Rohrelementteilstücks bewegt und/oder mit zunehmendem Druck auf diese angedrückt.

Bei einer bevorzugten Ausführungsform ist das zweite Rohrelementteilstück auch aus Gründen der Stabilität beim Vergießen aus einem eher steifen Kunststoffmaterial vorgesehen, zum Beispiel mit einer Shore-Härte (Shore D, in der gesamten Offenbarung) von mindestens 70 Shore, 80 Shore beziehungsweise 90 Shore, wobei der Spannabschnitt weiter bevorzugt aus demselben Material monolithisch mit dem übrigen zweiten Rohrelementteilstück vorgesehen ist. Um gleichwohl eine gewisse Beweglichkeit in Richtung des ersten Rohrelementteilstücks zu ermöglichen, ist der Spannabschnitt dabei vorzugsweise durch Trennfugen in Spannzungen unterteilt (auch unabhängig von den eben genannten Shore-Werten).

Eine Trennfuge erstreckt sich dabei von einem Ende des zweiten Rohrelementteilstücks in Richtung des entgegengesetzten Endes, endet jedoch zu diesem beabstandet; in Abstandsrichtung geht die Trennfuge durch. Da eine Vielzahl Trennfugen vorgesehen sind, beispielsweise mindestens sechs, acht, zehn bzw. zwölf Trennfugen, ist die Erstreckung einer Spannzunge in Umlaufrichtung (bezogen auf einen Umlauf um die Mittenachse der Leitung) entsprechend klein und ist jede Spannzunge für sich entsprechend gut beweglich.

Um diese Beweglichkeit weiter zu verbessern, kann ein Übergangsbereich zwischen einer jeweiligen Spannzunge und dem übrigen Rohrelementteilstück, der insoweit eine Art Scharnier darstellen kann, auch mit verringerter Wanddicke ausgeführt werden. Die in Abstandsrichtung genommene Wanddicke kann also beispielsweise durch eine sich in Umlaufrichtung erstreckende Nut reduziert sein, vorzugsweise eine innenseitig des Rohrelementteilstücks angeordnete Nut.

Sowohl im Falle eines schraubbaren Spannrings als auch bei einem allein in Leitungsrichtung verschiebbaren Spannrings ist in bevorzugter Ausgestaltung ein Dichtelement vorgesehen sein, das mit dem Spannring verspannt wird und dann zwischen erstem und zweitem Rohrelementteilstück dichtet. Das Dichtelement ist also vorzugsweise in Umlaufrichtung durchgehend vorgesehen und liegt an einer Außenmantelfläche des ersten Rohrelementteilstücks an; zudem kann es beispielsweise an der Innenmantelfläche und/oder dem stirnseitigen Ende des zweiten Rohrelementteilstücks anliegen. In der Spannposition bewirkt der Spannring dann eine gewisse Verformung des Dichtelements beziehungsweise drückt dieses an, sodass ein möglicher Spalt zwischen Außenmantelfläche des ersten Rohrelementteilstücks und Innenmantelfläche des zweiten Rohrelementteilstücks gedichtet wird.

Bevorzugt ist ein zumindest abschnittsweise keilförmiges Dichtelement, dessen Keilform beim Verschieben beziehungsweise Andrücken in Leitungsrichtung (welches durch den Spannring bewirkt wird, vorzugsweise durch eine Drehbewegung davon) zunehmend angedrückt wird. Ein solches Dichtelement kann beispielsweise mit einer sich in Leitungsrichtung erstreckenden Innenfläche am ersten Rohrelementteilstück anliegen und mit einer gegenüber der Leitungsrichtung nach außen geneigten Außenfläche an einem Innenflächenabschnitt des zweiten Rohrelementteilstücks anliegen, vorzugsweise einem komplementär dazu nach außen geneigten Innenflächenabschnitt des zweiten Rohrelementteilstücks. Wird das Dichtelement dann in Leitungsrichtung verschoben, vorzugweise durch eine Schraubbewegung des Spannrings, ist die Außenfläche des Dichtelements an dem Innenflächenabschnitt des zweiten Rohrelementteilstücks geführt und wird das Dichtelement zunehmend dagegen und gegen die Außenfläche des ersten Rohrelementteilstücks gedrückt.

Bei einer bevorzugten Ausführungsform wird die Spannring-Verschiebbarkeit (egal ob schraubbar oder allein in Leitungsrichtung verschiebbar) durch einen Anschlag begrenzt, beispielsweise einen endseitig des zweiten Rohrelements vorgesehenen Anschlag; es kann etwa ein nach außen hervortretender Flansch vorgesehen sein (nicht zwingend umlaufend). In der Endposition kann dann beispielsweise aufgrund einer vorstehend beschriebenen, geneigten Außenfläche des zweiten Rohrelementteilstücks auch die Verspannung maximal sein. Der Anschlag kann einem Monteur das Erreichen einer zuverlässigen Arretierung anzeigen.

Eine bevorzugte Ausgestaltung eines zweiten Rohrelementteilstücks, in dem verschiebbar ein erstes geführt ist, betrifft ein in einen Rohrabschnitt und einen damit einstückigen Kontaktabschnitt untergliedertes zweites Rohrelementteilstück. Der Rohrabschnitt ist aus einem vergleichsweise steifen Kunststoffmaterial vorgesehen, das beispielsweise den beim Vergießen von Beton auftretenden Kräften standhalten kann und auf eine Krafteinwirkung generell vergleichsweise verformungsarm reagiert. Indem dabei für den Kontaktabschnitt ein gegenüber jenem des Rohrabschnitts weicheres Material vorgesehen wird, lässt sich gleichwohl eine gut dichtende Anlage zwischen zweitem und erstem Rohrelementteilstück erreichen und kann beispielsweise einem Eindringen von entlang der Außenseite des Rohrelements kriechendem Wasser vorgebeugt werden.

Das "weichere" Material des Kontaktabschnitts kann beispielsweise eine um mindestens 10 %, vorzugsweise mindestens 20 % bzw. 30 %, geringere Shore-Härte als das Material des Rohrabschnitts haben. Im Allgemeinen können Rohr- und Kontaktabschnitt beispielsweise auch aus demselben Kunststoffmaterial vorgesehen sein, das in den beiden Abschnitten mit unterschiedlichem Vernetzungsgrad vorliegt. Vorzugsweise ist für die beiden Abschnitte jedoch ein jeweils anderes Kunststoffmaterial vorgesehen und sind die beiden Kunststoffmaterialien in einem formenden Verfahren aneinander angeformt, handelt es sich also beispielsweise um ein Zweikomponentenspritzgussteil.

Der Kontaktabschnitt kann beispielsweise aus einem thermoplastischen Elastomer vorgesehen sein, vorzugsweise aus TPE bzw. TPS (auf Styrolblockcopolymeren basierendes TPE).

Für den Rohrabschnitt kann beispielsweise ein Kunststoffmaterial mit Polycarbonat, Polyamid, Polystyrol, Polymethylmethacrylat, Polyethylenterephthalat, Polybutylenterephthalat, Acrylester-Styrol-Acrylnitril beziehungsweise Styrol-Acrylnitril als Bestandteil vorgesehen sein. Diese Materialien können auch für das erste Rohrelementteilstück und/oder ein vorstehend beschriebenes Montage-Rohrelement bevorzugt sein; gleichermaßen kann ein entsprechendes Material auch für ein nicht im eben diskutierten Sinne in Rohr- und Kontaktabschnitt untergliedertes zweites Rohrelementteilstück vorgesehen werden.

Das aus Rohrabschnitt und demgegenüber weicheren Kontaktabschnitt aufgebaute Rohrelementteilstück kann beispielsweise im Falle eines vorstehend beschriebenen Spannrings von Interesse sein, der in seiner Spannposition dann den Kontaktabschnitt andrückt. Ferner kann der "weichere" Kontaktabschnitt auch in vorteilhafter Weise mit einem Rastmechanismus kombiniert werden und dazu einen nach innen hervortretenden Kontaktkragen aufweisen bzw. als solcher ausgebildet sein. Der Kontaktkragen kann dann in am ersten Rohrelementteilstück ausgebildete, außenseitig umlaufende Vertiefungen greifen, die in Leitungsrichtung zueinander beabstandet die Relativpositionen vorgeben.

Ein entsprechender Rastmechanismus kann selbstverständlich auch unabhängig von einem "weicherem" Kontaktabschnitt von Interesse sein. Es kann also ein nach innen hervortretender Kontaktkragen, der in Vertiefungen am ersten Rohrelementteilstück verrastet, auch aus demselben Material wie das übrige zweite Rohrelementteilstück vorgesehen sein, im Allgemeinen selbst im Falle eines vergleichsweise steifen Rohrelementteilstücks.

Eine bevorzugte Ausführungsform betrifft ein zweites Rohrelementteilstück, das insgesamt aus einem gegenüber jenem des ersten Rohrelementteilstücks weicheren Materials vorgesehen ist. Das zweite Rohrelementteilstück kann beispielsweise aus einem Kunststoffmaterial mit einer Shore-Härte von nicht mehr als 50 Shore, 60 Shore beziehungsweise 70 Shore vorgesehen sein; die Shore-Härte kann beispielsweise um mindestens 10 %, 20 % bzw. 30 % geringer als jene des ersten Rohrelementteilstücks sein. Diese Ausführungsform betrifft vorzugsweise ein monolithisches zweites Rohrelementteilstück aus einem durchgehenden Material, beispielsweise von darin statistisch zufallsverteilten Partikeln abgesehen. "Monolithisch" meint durchgehend ohne Materialgrenze (zu einem anderen Material oder einem Materialabschnitt anderer Herstellungsgeschichte). Es soll dann also ein monolithisches zweites Rohrelementteilstück aus einem weicheren Material als das erste Rohrelementteilstück vorgesehen sein, das vorzugsweise ebenfalls monolithisch ist.

In weiterer Ausgestaltung ist das zweite Rohrelementteilstück dabei aus einem Gummimaterial vorgesehen, besonders bevorzugt aus synthetischem Gummimaterial, etwa auf der Basis von synthetischem Kautschuk. Das synthetische Kautschukmaterial kann beispielsweise Styrol, Butadien, Styrolacrylat, Reinacrylat bzw. Vinylacetat als Bestandteil aufweisen. Das zweite Rohrelementteilstück kann beispielsweise durch Pressen von Gummimaterial in einer Form und Vulkanisieren desselben darin hergestellt werden, etwa durch Pressen in einer Form bei mindestens 80 bar, 90 bar bzw. 95 bar (und beispielsweise höchstens 110 bar bzw. 105 bar), zum Beispiel bei einer Temperatur von mindestens 170°C, 180°C bzw. 190°C (und höchstens 210°C bzw. 200°C). Alternativ kann das "weichere" zweite Rohrelementteilstück etwa auch spritzgegossen werden und dazu beispielsweise aus einem thermoplastischen Elastomer vorgesehen sein, etwa TPE bzw. TPS.

Eine besonders bevorzugte Ausgestaltung des "weicheren" zweiten Rohrelementteilstücks betrifft dessen Befestigung an der übrigen Durchführung, nämlich an einem dem ersten Rohrelementteilstück entgegengesetzten Montage-Rohrelement. Das zweite (im Vergleich weiche) Rohrelementteilstück kann nämlich etwas geweitet und auf das Montage-Rohrelement gezogen werden. Eine zusätzliche Verrutschsicherung ist möglich, indem das zweite Rohrelementteilstück einen nach außen hervortretenden Vorsprung des Montage-Rohrelements bezogen auf die Leitungsrichtung hintergreift. Als solcher Vorsprung kann insbesondere eine außenseitig am Montage-Rohrelement umlaufende Stegdichtung dienen, etwa eine einstückig mit dem übrigen Montage-Rohrelement ausgebildete Stegdichtung, beispielsweise eine aus einem weicheren Material in einem Zweikomponentenspritzgussverfahren angeformte Stegdichtung.

Im letztgenannten Fall wird die Dichtwirkung der Stegdichtung zum Wand- oder Bodenelement hin durch das teilweise Abdecken mit dem zweiten Rohrelementteilstück jedenfalls nicht maßgeblich verschlechtert, weil ja auch das zweite Rohrelementteilstück eher weich ist und somit ein Stück weit elastisches federnd an dem Wand- oder Bodenelement anliegen kann. Ein Vorteil des die Stegdichtung teilweise umgreifenden zweiten Rohrelementteilstücks kann auch darin bestehen, dass aufgrund des Kontakts zur (im Vergleich weichen) Stegdichtung das zweite Rohrelementteilstück auch gut gegen das Montage-Rohrelement gedichtet sein kann. Es kann letztlich die an einem standardmäßig verfügbaren Produkt außenseitig vorgesehene Dichtung (die eigentlich der Dichtung zum Wand- oder Bodenelement hin dient) für die Dichtung gegen ein der Verlängerung des Montage-Rohrelements dienendes Rohrelementteilstück genutzt werden.

Eine ebenfalls bevorzugte Ausführungsform betrifft ein beiderends verschlossenes Rohrelement. Ein entsprechender Verschluss muss dabei nicht notwendigerweise am jeweiligen Rohrelementteilstück selbst vorgesehen sein, sondern kann beispielsweise auch an einem jeweils angesetzten Montage-Rohrelement angeordnet werden. Es kann zum Beispiel beiderends jeweils ein Montage-Rohrelement vorgesehen und können die beiden Rohrelementteilstücke hinsichtlich der Leitungsrichtung dazwischen angeordnet sein. Die beiden Montage-Rohrelemente können dabei jeweils mit einem Deckel, etwa einem einsetz- und bajonettartig-arretierbaren Deckel, verschlossen und beispielsweise gegen eindringende Feuchtigkeit gedichtet sein.

Die Erfinder haben jedenfalls festgestellt, dass die Längenverstellbarkeit eines beiderends verschlossenen Rohrelements zumindest erschwert sein kann, weil nur begrenzt Luft aus- bzw. einströmen kann. Das Herausnehmen eines Verschlusses zum Zwecke der Längeneinstellung kann indes selbst im Falle eines wiedereinsetzbaren Verschlusses nachteilig sein, weil dies erstens zusätzlichen Montageaufwand bedeutet und der Verschluss zweitens auf der Baustelle verschmutzt und so auch in seiner Funktion beeinträchtigt werden kann.

Erfindungsgemäß wird deshalb zwischen zwei Relativpositionen ein Lüftungskanal geöffnet, besteht also zwischen zwei Relativpositionen eine fluidische Verbindung vom Inneren des Rohrelements nach außerhalb. Zwischen zwei Relativpositionen kann ein entsprechender Strömungsquerschnitt, durch den Luft ein- oder austreten kann, beispielsweise um mindestens das 2-, 4-, 6-, 8- bzw. 10-fache größer als in den Relativpositionen sein; vorzugsweise ist die Durchführung in den Relativpositionen im Rahmen des technisch Möglichen dicht. Diese Ausführungsform wird auch unabhängig von den Merkmalen des Hauptanspruchs als Erfindung gesehen und soll auch unabhängig vom Vorhandensein einer Arretierungsvorrichtung offenbart sein; dabei sind gleichwohl Kombinationen mit anderen Merkmalen dieser Offenbarung möglich, welche nicht die Arretierungsvorrichtung betreffen.

Eine bevorzugte Weiterbildung des Lüftungskanals betrifft ein zweites Rohrelementteilstück mit einem nach innen hervortretenden Kontaktkragen, der am ersten Rohrelementteilstück (das im zweiten verschiebbar geführt ist) anliegt. Dabei liegt eine Kontaktfläche zwischen dem Kontaktkragen und dem ersten Rohrelementteilstück in den Relativpositionen hinsichtlich der Umlaufrichtung durchgehend vor, also als um das erste Rohrelementteilstück umlaufende, in sich geschlossene Linie bzw. Fläche. Zwischen den Relativpositionen ist die Kontaktfläche jedoch unterbrochen. Es kann also beispielsweise außenseitig am ersten Rohrelementteilstück eine den Kontaktkragen zwischen zwei Relativpositionen abhebende Erhebung und/oder eine die Kontaktfläche unterbrechende, lokal zwischen zwei Relativpositionen angeordnete Vertiefung vorgesehen sein.

In bevorzugter Ausgestaltung ist außenseitig am ersten Rohrelementteilstück eine Lüftungsrille mit einer Erstreckung in Leitungsrichtung vorgesehen - die Erstreckung liegt dabei nicht notwendigerweise allein in Leitungsrichtung, sondern jedenfalls auch. Dabei erstreckt sich die Lüftungsrille nicht nur zwischen den Relativpositionen, sondern auch in diese hinein. In anderen Worten durchsetzt die Lüftungsrille also als Teil des Rastmechanismus vorgesehene Erhebungen zwischen den Relativpositionen und geht sie in den Relativpositionen in die Vertiefungen des Rastmechanismus über. Bei der Längenverstellung wird der Kontaktkragen dann zwischen zwei Relativpositionen von der Erhebung des Rastmechanismus angehoben, wobei die Erhebung jedoch durch die Lüftungsrille unterbrochen ist, sodass sich also ein Lüftungskanal öffnet. Arretierungs- und Lüftungsfunktion lassen sich so auf besonders vorteilhafte Weise kombinieren.

Generell wird selbstverständlich nicht notwendigerweise nur ein Lüftungskanal geöffnet, sondern können etwa umlaufend verteilt auch eine Mehrzahl Entlüftungskanäle, zum Beispiel mindestens drei, vier oder fünf, vorgesehen sein.

Eine weitere Ausführungsform, die ebenfalls unabhängig von der Arretierungsvorrichtung als Erfindung gesehen wird und in dieser Form offenbart sein soll, betrifft eine Verdrehsicherung, welche die Versetzbarkeit der Rohrelementteilstücke in Leitungsrichtung ermöglicht, jedoch ein Verdrehen der beiden relativ zueinander blockiert (ein Verdrehen hinsichtlich der Umlaufrichtung, also bezogen auf einen Umlauf um die Mittenachse der Leitung). Dies kann beispielsweise die Montage vereinfachen, etwa im Falle endseitig des Rohrelements vorgesehener Aufhängungselemente, die so in der passenden Anordnung zueinander gehalten werden.

Vorzugsweise ist als Verdrehsicherung an einem der beiden Rohrelementteilstücke ein sich in Leitungsrichtung erstreckender Vorsprung vorgesehen, der in einer entsprechenden Führungsrille am anderen der beiden Rohrelementteilstücke geführt ist. Besonders bevorzugt ist der Vorsprung am zweiten Rohrelementteilstück nach innen gerichtet und die Führungsrille außenseitig am ersten Rohrelementteilstück vorgesehen.

Die Erfindung betrifft auch die Verwendung einer vorliegend offenbarten Durchführung zum Einbau in ein Wand- oder Bodenelement. Dabei wird fließfähiges Material, also mit bestimmter Viskosität flüssiges Material, vorzugsweise Beton oder Mörtel, um das Rohrelement angeordnet. Das Material erstarrt dann und hält das Rohrelement der Durchführung (bezogen auf die Umlaufrichtung) umschlossen und damit die Durchführung in dem Wand- oder Bodenelement. Letzteres kann dabei auch erst entstehen, wenn nämlich beispielsweise die Durchführung in einer Schalung montiert und dann das Wand- oder Bodenelement gegossen und dabei die Durchführung vergossen wird.

Im Folgenden wird die Erfindung anhand von Ausführungsbeispielen näher erläutert, wobei weiterhin nicht im Einzelnen zwischen den Anspruchskategorien unterschieden wird und die Merkmale auch in anderer Kombination erfindungswesentlich sein können.

Im Einzelnen zeigt
- Fig. 1: eine erste erfindungsgemäße Durchführung in einer Schrägansicht;
- Fig. 2: die Durchführung gemäß Fig. 1 in einer geschnittenen Seitenansicht;
- Fig. 3: eine jener gemäß Fig. 2 entsprechende Darstellung mit im Vergleich dazu gelöster Arretierungsvorrichtung;
- Fig. 4: die Situation gemäß Fig. 3 in einer nicht geschnittenen Seitenansicht;
- Fig. 5: eine zweite erfindungsgemäße Durchführung in einer Schrägansicht;
- Fig. 6: die Durchführung gemäß Fig. 5 in einer geschnittenen Seitenansicht;
- Fig. 7: die Durchführung gemäß den Fig. 5 und 6 in anderer Längeneinstellung;
- Fig. 8: die Durchführung gemäß den Fig. 5 bis 7 in einer nicht geschnittenen Seitenansicht;
- Fig. 9: eine dritte erfindungsgemäße Durchführung in einer geschnittenen Seitenansicht ;
- Fig. 10: den Spannring der Durchführung gemäß Fig. 9 in vergrößerter Darstellung, und zwar ebenfalls in einer geschnittenen Seitenansicht;
- Fig. 11: die Durchführung gemäß Fig. 9 in anderer Längeneinstellung.

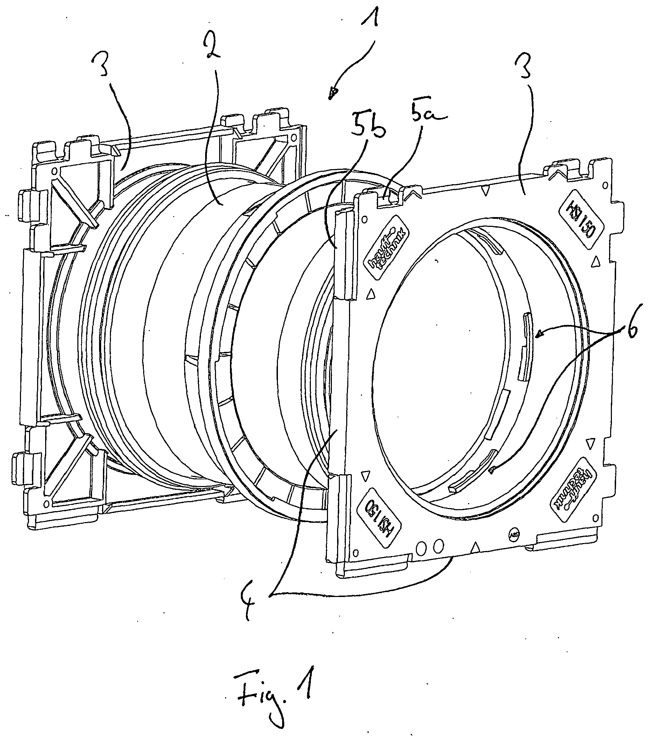

Fig. 1 zeigt eine erfindungsgemäße Durchführung 1 mit einem Rohrelement 2 zum Einbau in eine Wand. Beiderends des Rohrelements 2 ist jeweils eine Flanschplatte 3 als Befestigungselement vorgesehen. Nach dem Einbau der Durchführung 1 in die Wand grenzen die beiden Flanschplatten 3 jeweils mit ihrer außenseitigen Stirnfläche an die jeweilige Wandfläche, und das Rohrelement 2 hält eine Durchgangsöffnung zwischen den beiden Seiten der Wand frei. Vor dem Vergießen kann die Durchführung über die Flanschplatten 3 an der Schalung befestigt werden, beispielsweise durch Vernageln oder Verschrauben mit den Schalungselementen, an welchen die Flanschplatten 3 mit ihren Stirnseiten anliegen. Die Schalung wird dann mit Beton aufgefüllt, und die Schalungselemente werden nach dessen Aushärten entfernt.

An den Seitenkanten 4 der Flanschplatten 3 sind jeweils in einem Eckbereich Verbindungselemente vorgesehen, nämlich formschlüssig ineinandergreifende Nut- 5a und Federelemente 5b. Die Federelemente 5b können in den Nutelementen 5a einer weiteren Durchführung 1 verrasten bzw. können die Nutelemente 5a Federelemente 5b einer weiteren Durchführung 1 aufnehmen, sodass eine Mehrzahl Durchführungen 1 modulartig mit sich parallel erstreckenden Rohrelementen 2 zusammenbaubar sind.

Im Inneren des Rohrelements 2 ist ein Bajonettmechanismus 6 zu erkennen, mittels welchem ein Einsatz durch Drehen in der Durchgangsöffnung befestigt werden kann, etwa ein das Rohrelement 2 während des Vergießens verschließender Deckel oder ein später zu einer hindurchgeführten Leitung dichtender Funktionseinsatz.

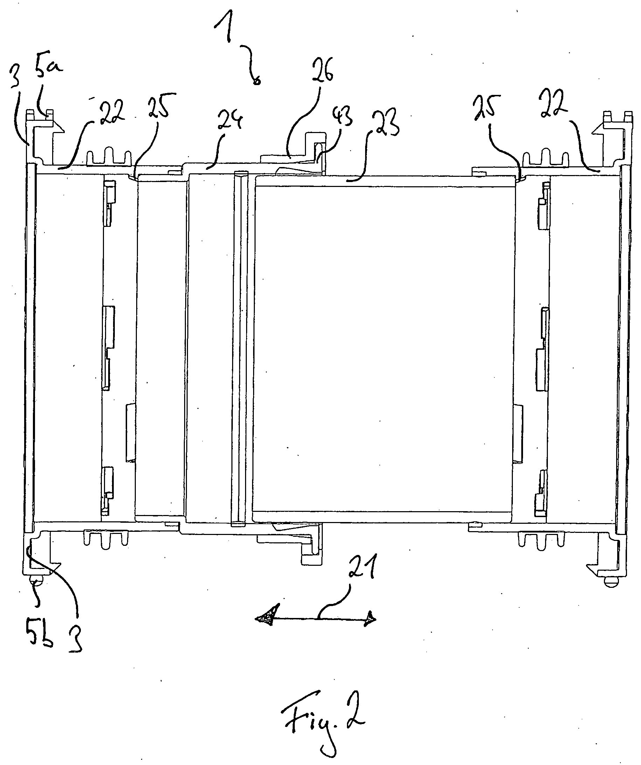

Fig. 2 zeigt dieselbe Durchführung 1 in einer geschnittenen Seitenansicht, und zwar mit einer die Leitungsrichtung 21 beinhaltenden Schnittebene. Bezogen auf die Leitungsrichtung 21 beiderends sind die Flanschplatten 3 mit den Verbindungselementen 5a,b zu erkennen. Ferner ist in dieser Darstellung auch der Aufbau des Rohrelements 2 näher zu erkennen, das nämlich aus vier für sich einstückigen Rohrteilen zusammengesetzt ist. Endseitig ist jeweils ein Montage-Rohrelement 22 mit jeweils monolithisch damit ausgebildeter Flanschplatte 3 vorgesehen.

Zwischen den beiden Montage-Rohrelementen 22 sind zwei nachstehend weiter im Detail erläuterte Rohrelementteilstücke angeordnet. Dabei handelt es sich um ein erstes Rohrelementteilstück 23, das in ein zweites Rohrelementteilstück 24 eingeschoben und in Leitungsrichtung 21 darin (innerhalb gewisser Grenzen) verschiebbar geführt ist. Durch Relativverschieben der beiden Rohrelementteilstücke 23, 24 kann die in Leitungsrichtung 21 genommene Länge des Rohrelements 2 verändert und so an unterschiedliche Wanddicken angepasst werden. Die Montage-Rohrelemente 22 sind jeweils bis zu einem Anschlag 25 auf das erste 23 bzw. zweite 24 Rohrelementteilstück aufgeschoben und insoweit in ihrer Relativposition dazu festgelegt. Durch Verschieben der beiden Rohrelementteilstücke 23, 24 relativ zueinander werden entsprechend auch die Montage-Rohrelemente 22 relativ zueinander verschoben.

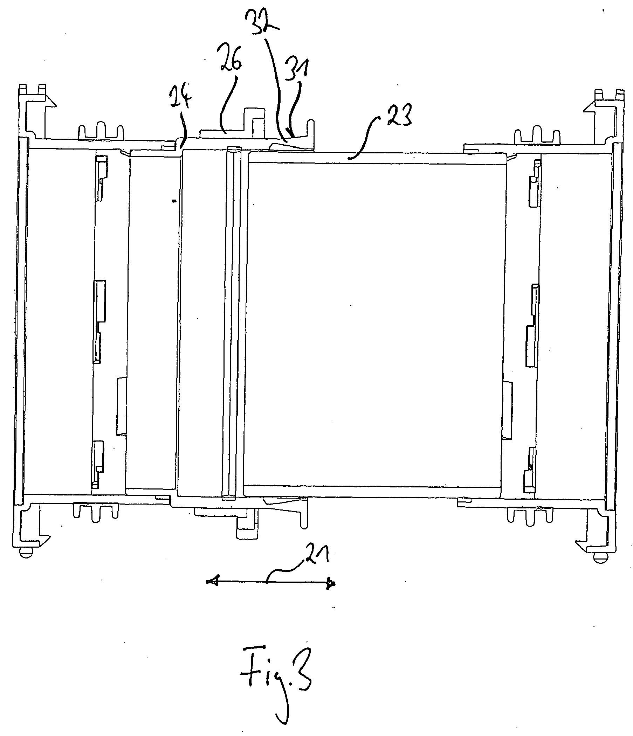

Zur Arretierung der Rohrelementteilstück-Verschiebbarkeit ist außenseitig am zweiten Rohrelementteilstück 24 geführt ein Spannring 26 vorgesehen. Der Spannring 26 ist in Fig. 2 in seiner Spannposition gezeigt, er drückt also das zweite Rohrelementteilstück 24 gegen das erste 23 und blockiert so die Rohrelementteilstück-Verschiebbarkeit. Demgegenüber ist der Spannring 26 in Fig. 3 in einer die Rohrelementteilstück-Verschiebbarkeit ermöglichenden Position dargestellt. Der Spannring 26 ist also von dem Ende des zweiten Rohrelementteilstücks 24, in welches das erste Rohrelementteilstück 23 eingeschoben ist, beabstandet. Damit wird das zweite 24 nicht gegen das erste 23 Rohrelementteilstück gedrückt, es ist also eine Längeneinstellung möglich.

Ein Außenflächenbereich 31 des zweiten Rohrelementteilstücks 24 ist dort, wo der Spannring 26 seine Spannposition einnimmt, leicht nach außen geneigt, also gegenüber der Leitungsrichtung 21 verkippt. Infolgedessen drückt der Spannring 26, wenn er von der in Fig. 3 gezeigten Position in die Spannposition gemäß Fig. 2 geschoben wird, das zweite Rohrelementteilstück 24 (konkret den Spannabschnitt 32 davon) mit zunehmendem Druck auf das erste Rohrelementteilstück 23.

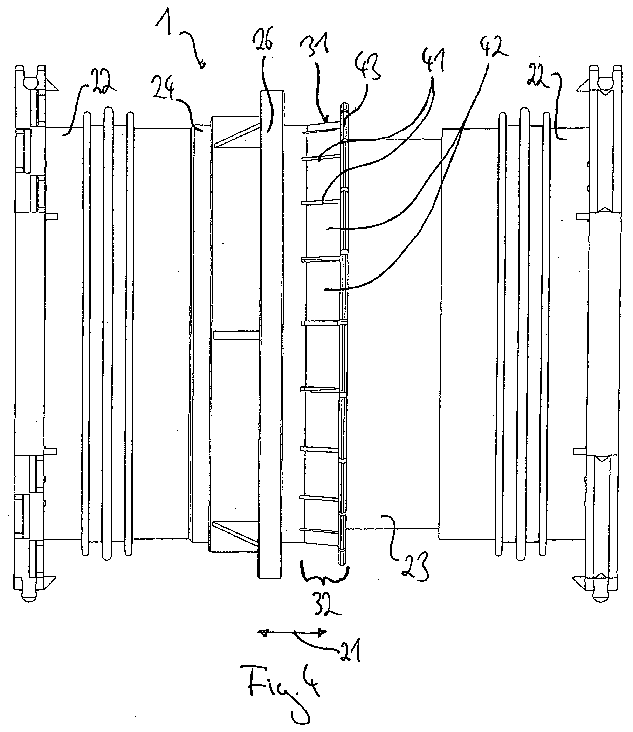

Aus Fig. 4, die die Durchführung 1 in einer nicht geschnittenen Seitenansicht zeigt, wird der Aufbau des Spannabschnitts 32 weiter deutlich. Im Spannabschnitt 32 ist das zweite Rohrelementteilstück 24 nämlich durch sich in Leitungsrichtung 21 erstreckende Trennfugen 41 in Spannzungen 42 unterteilt. Die Unterteilung in Spannzungen 42 erleichtert bzw. ermöglicht die Beweglichkeit des zweiten Rohrelementteilstücks 24 im Spannabschnitt 32, und zwar in radialer Richtung, also in Abstandsrichtung, was das Andrücken vereinfacht.

Für die Verschiebbarkeit des Spannrings 26 ist in der Spannposition ein Anschlag 43 am zweiten Rohrelementteilstück 24 vorgesehen. Wird der Spannring 26 bis zu diesem geschoben, ist die Verspannung und damit die Arretierung maximal, was die Arretierungsvorrichtung für einen Benutzer gut handhabbar macht.

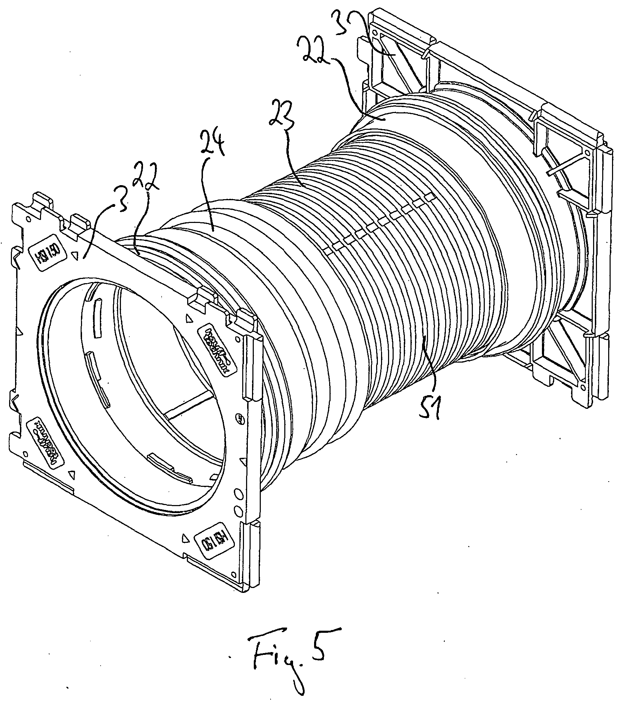

Fig. 5 zeigt eine weitere Durchführung 1, an der wiederum beiderends Montage-Rohrelemente 22 mit Flanschplatten 3 vorgesehen sind. Insoweit wird auf die Fig. 1 bis 5 mit entsprechender Erläuterung verwiesen. Die Durchführung 1 gemäß Fig. 5 unterscheidet sich allerdings in der Ausgestaltung von erstem 23 und zweitem 24 Rohrelementteilstück von jener gemäß der vorstehenden Beschreibung.

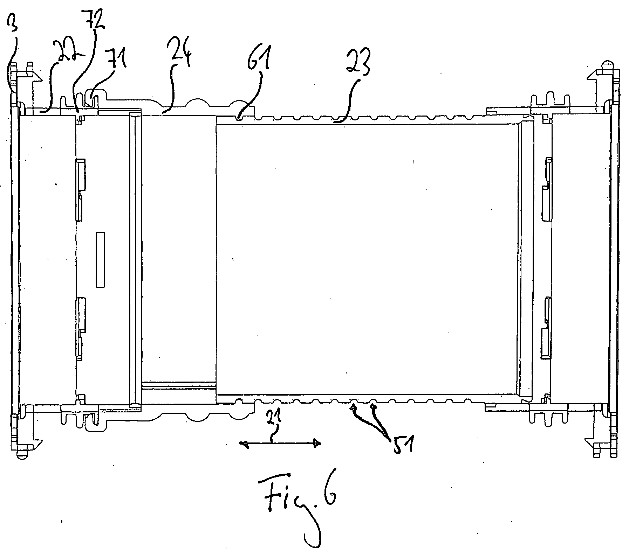

Zum Einen ist in diesem Fall nämlich kein Spannring zur Arretierung vorgesehen, sondern stellt ein Rastmechanismus die Arretierungsfunktion zur Verfügung. Dazu sind im ersten Rohrelementteilstück 23 außenseitig umlaufend Vertiefungen 51 vorgesehen, in welchen in den Relativpositionen ein am zweiten Rohrelementteilstück 24 ausgebildeter, nach innen hervortretender Vorsprung 61 zu liegen kommt, vgl. Fig. 6.

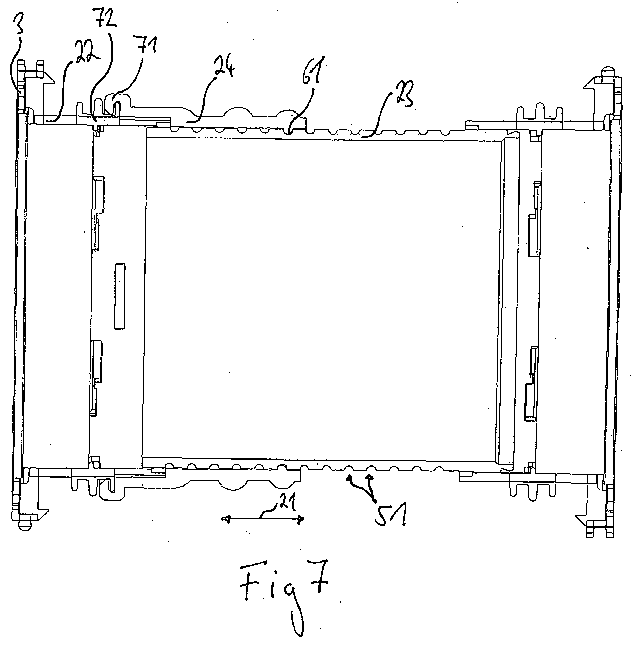

Das zweite Rohrelementteilstück 24 ist aus EPDM vorgesehen, wohingegen das erste Rohrelementteilstück 23 ein ABS-Spritzgussteil ist. Die Shore-Härte des zweiten Rohrelementteilstücks 24 liegt bei 50 Shore und damit ca. 44 % niedriger als jene des ersten Rohrelementteilstücks 23, die bei ca. 90 Shore liegt. Beim Relativverschieben der beiden Rohrelementteilstücke 23, 24 kann sich das zweite Rohrelementteilstück 24 deshalb ein Stück weit nach außen verformen, bis der Vorsprung 61 in einer jeweils der nächsten Relativposition entsprechenden Vertiefung 51 einrastet. In der in Fig. 6 gezeigten Situation ist das Rohrelement 2 auf maximale Länge eingestellt, wohingegen in Fig. 7 eine Einstellung mit kürzerer Länge gezeigt ist.

Zur Befestigung des zweiten Rohrelementteilstücks 24 am entsprechenden Montage-Rohrelement 22 (dem in den Fig. 6 und 7 linken) ist an seinem dem Ende mit Vorsprung 61 entgegengesetzten Ende ein Formschlusselement 71 vorgesehen, das eine einstückig mit dem Montage-Rohrelement 22 ausgebildete Stegdichtung 72 teilweise umgreift. Die Stegdichtung 72 ist aus einem thermoplastischen Elastomer in einem Zweikomponentenspritzgussverfahren an das übrige Montage-Rohrelement 22 aus ABS angespritzt und dichtet nach dem Einbau in die Wand zu dieser hin. Das Formschlusselement 71 umgreift einen der drei Stege der Stegdichtung 72, sodass das zweite Rohrelement 24 gegen ein Verrutschen in Leitungsrichtung 21 gesichert gehalten ist.

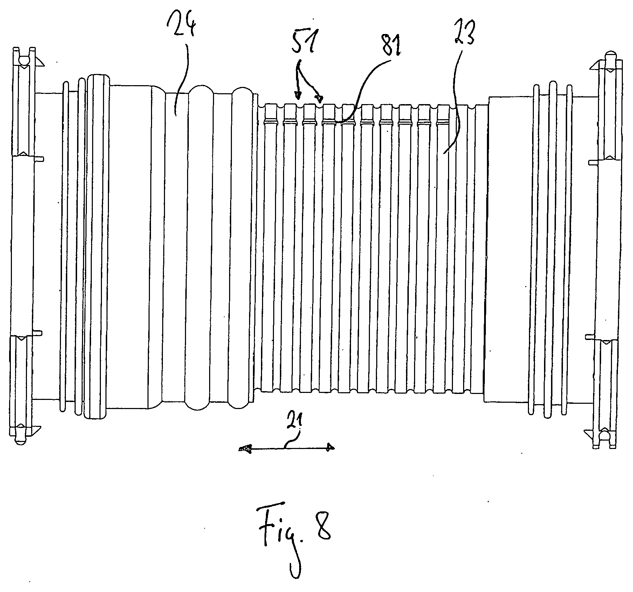

In der nicht geschnittenen Seitenansicht in Fig. 8 ist ein weiteres Ausstattungsmerkmal der Durchführung 1 zu erkennen, nämlich eine außenseitig im ersten Rohrelementteilstück 23 vorgesehene Lüftungsrille 81. Diese erstreckt sich in Leitungsrichtung 21 über die Relativpositionen hinweg, durchsetzt also die Erhebungen zwischen den Vertiefungen 51 des Rastmechanismus. Dabei liegt der Grund der Führungsrille auf derselben Höhe mit dem jeweiligen Grund einer Vertiefung 51 (hinsichtlich der Abstandsrichtung), sodass also der Vorsprung 61 in einer Vertiefung umlaufend dichtend anliegt.

Zwischen den Relativpositionen begrenzt die Lüftungsrille 81 jedoch einen Lüftungskanal, durch den beim Zusammenschieben oder Auseinanderziehen der beiden Rohrelementteilstücke 23, 24 Luft strömen kann, wenn nämlich die beiden Montage-Rohrelemente 22 mit einem jeweiligen Verschluss weitgehend luftdicht verschlossen sind.

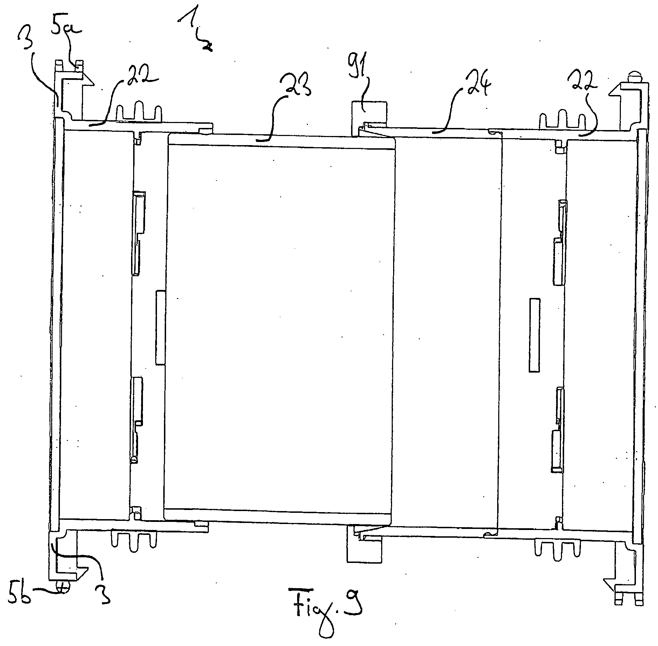

Fig. 9 zeigt eine weitere erfindungsgemäße Durchführung 1, die hinsichtlich der Ausgestaltung der Montage-Rohrelemente 22 den bisher erläuterten Durchführungen 1 entspricht. Ähnlich der Durchführung 1 gemäß den Figuren 1 bis 4 ist auch in diesem Fall ein Spannring 91 vorgesehen, der sich jedoch in seiner Ausgestaltung von jenem der ersten Durchführung 1 unterscheidet. Der Spannring 91 ist nämlich durch eine Schraubbewegung verschiebbar geführt, wird also durch eine Drehbewegung in die Spannposition gebracht.

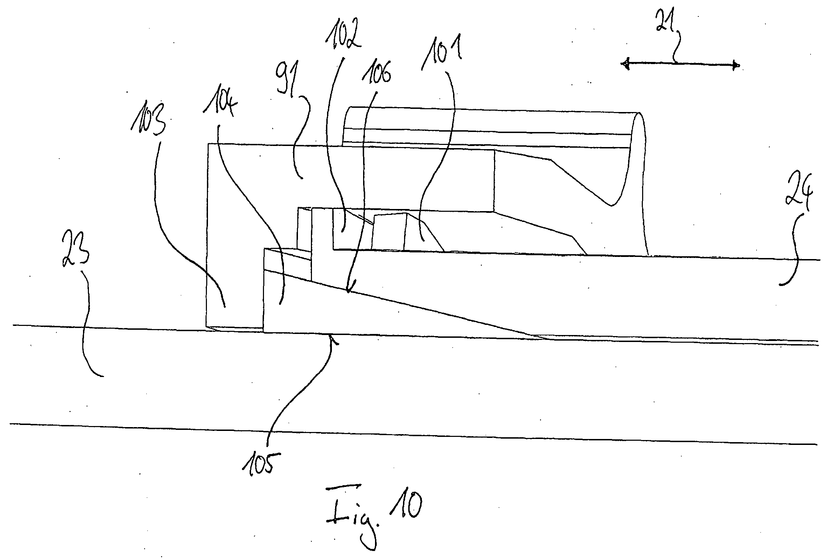

Fig. 10 zeigt diesen Spannring 91 im Detail. Innenseitig, also den Rohrelementteilstücken 23, 24 zugewandt, ist am Spannring 91 ein Gewindeabschnitt 101 vorgesehen; über den Umlauf verteilt ist der Spannring 91 mit insgesamt vier solchen Gewindeabschnitten 101 versehen. Wird der Spannring 91 in die Spannposition gebracht, findet jeder der Gewindeabschnitte 101 des Spannrings 91 eine Anlage an einem jeweilig komplementären Gewindeabschnitt 102 außenseitig am zweiten Rohrelementteilstück 24.

Wird der Spannring 91 dann also in Umlaufrichtung gegenüber dem zweiten Rohrelementeilstück 24 verdreht, erfolgt aufgrund der in Anlage aneinander geführten Gewindeabschnitte 101, 102 zugleich eine Relativbewegung zwischen dem zweiten Rohrelementteilstück 24 und dem Spannring 91 in Leitungsrichtung 21. Durch Drehen des Spannrings 91 wird dieser in Richtung des zweiten Rohrelementteilstücks 24 gezogen.

An dem den zweiten Rohrelementteilstück 24 abgewandten Ende des Spannrings 91 ist ein Spannabschnitt 103 angeformt, der dabei ein Dichtelement 104 in einen dichtenden Sitz zwischen erstem 23 und zweiten Rohrelementteilstück 24 drückt. Das Dichtelement 104 liegt mit einer sich in Leitungsrichtung 21 erstreckenden Innenfläche 105 am ersten Rohrelementteilstück 23 an; mit einer gegenüber der Leitungsrichtung 21 nach außen verkippten Außenfläche 106 liegt das Dichtelement 104 an einem gleichermaßen gegenüber der Leitungsrichtung 21 geneigten Innenflächenabschnitt des zweiten Rohrelemetteilstücks 24 an. Wird der Spannring 91 durch Drehen in die Spannposition gebracht, drückt der Spannabschnitt 103 das Dichtelement 104 also zunehmend in den Sitz zwischen erstem 23 und zweitem Rohrelementteilstück 24, es werden also die beiden Rohrelementteilstücke 23, 24 gegeneinander gedichtet.

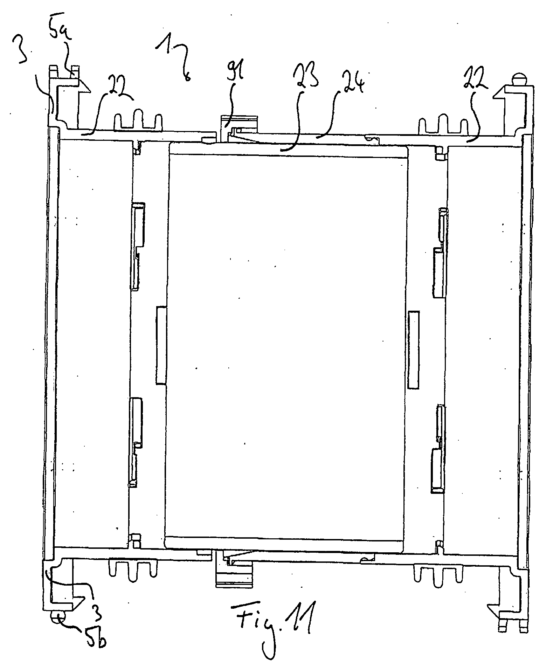

Fig. 11 zeigt die Durchführung 1 in anderer Längeneinstellung, die beiden Rohrelementteilstücke 23, 24 sind dort nämlich maximal ineinander geschoben; es ist also die minimale Länge der Durchführung 1 eingestellt (wohingegen Fig. 9 die maximale Länge zeigt).

## Patentansprüche

1. Verwendung einer Durchführung (1) zum Einbau in ein Wand- oder Bodenelement und Hindurchführen einer Leitung,
welche Durchführung (1) ein Rohrelement (2) aufweist, das dazu vorgesehen ist, das Wand- oder Bodenelement in Leitungsrichtung (21) zu durchsetzen,
wobei das Rohrelement (2) ein erstes Rohrelementteilstück (23) und ein zweites Rohrelementteilstück (24) aufweist, welche Rohrelementteilstücke (23, 24) relativ zueinander in Leitungsrichtung (21) versetzbar und somit in einer Mehrzahl unterschiedlicher Relativpositionen zueinander anordenbar sind, womit die in Leitungsrichtung (21) genommene Länge des Rohrelements (2) einstellbar ist,
wobei das erste Rohrelementteilstück (23) in das zweite Rohrelementteilstück (24) einführbar und dann zum Zwecke der Versetzbarkeit darin verschiebbar geführt ist,
wobei eine Arretierungsvorrichtung (26, 32; 51, 61) vorgesehen ist, welche in den Relativpositionen die Versetzbarkeit der Rohrelementteilstücke (23, 24) blockiert,
wobei als Arretierungsvorrichtung( 26, 32; 51, 61) ein Spannring (26, 91) vorgesehen ist, der zur Arretierung der Rohrelementteilstück-Verschiebbarkeit in eine Spannposition gebracht werden kann, in welcher der Spannring (26, 91) das erste (23) und das zweite Rohrelementteilstück 24 in ihrer Relativposition festlegt,
bei welcher Verwendung fließfähiges Material, welches dann erstarrt, das Rohrelement (2) umschließt, **dadurch gekennzeichnet, daß** in der Spannposition, der Spannring das zweite Rohrelementteilstück (24) nach innen auf das erste Rohrelementteilstück 23 spannt.

2. Verwendung nach Anspruch 1, bei welcher das fließfähige Material, welches dann erstarrt, Beton oder Mörtel ist.

3. Verwendung nach Anspruch 1 oder 2, bei welcher der Spannring (91) durch eine Schraubbewegung in die Spannposition bewegbar ist, wozu außenseitig an zumindest einem von dem ersten (23) und dem zweiten Rohrelementteilstück (24) eine entsprechende Schraubführung (102) vorgesehen ist.

4. Verwendung nach Anspruch 1 oder 2, bei welcher der Spannring (26) außenseitig des zweiten Rohrelementteilstücks (24) verschiebbar geführt ist und von einer die Rohrelementteilstück-Verschiebbarkeit ermöglichenden Position mit einer Bewegung allein in Leitungsrichtung (21) in die Spannposition verschoben werden kann.

5. Verwendung nach Anspruch 3 oder 4, bei welcher die Außenfläche (31) in einem Spannabschnitt (32) des zweiten Rohrelementteilstücks (24) bezogen auf die den Abstand zur Mittenachse der Leitung bestimmende Richtung nach außen geneigt ist, sodass der Spannring (26) beim Spannring-Verschieben in die Spannposition den Spannabschnitt (32) des zweiten Rohrelementteilstücks (24) zunehmend nach innen spannt.

6. Verwendung nach Anspruch 5, bei welcher das zweite Rohrelementteilstück (24) in dem Spannabschnitt (32) durch Trennfugen (41) mit einer jeweiligen Erstreckung in Leitungsrichtung (21) in Spannzungen (42) unterteilt ist, wobei die Spannzungen (42) eine gewisse Beweglichkeit in Abstandsrichtung haben und nach innen spannbar sind.

7. Verwendung nach einem der vorstehenden Ansprüche, bei welcher mit dem Spannring (26, 91) ein zwischen dem ersten (23) und dem zweiten Rohrelementteilstück (24) dichtendes Dichtelement (104) verspannt wird, vorzugsweise ein nach Art eines Keils am zweiten Rohrelementeilstück (24) verschiebbar gelagertes Dichtelement (104).

8. Verwendung nach einem der vorstehenden Ansprüche, bei welcher sich das zweite Rohrelementteilstück (24) in einen Rohrabschnitt und einen damit einstückigen Kontaktabschnitt gliedert, welcher Kontaktabschnitt zur dichtenden Anlage an dem ersten Rohrelementteilstück (23) ausgelegt und dazu aus einem gegenüber jenem des Rohrabschnitts weicheren Material vorgesehen ist.

9. Verwendung nach einem der vorstehenden Ansprüche, bei welcher die Arretierungsvorrichtung (26, 32; 51, 61) einen Rastmechanismus (51, 61) aufweist, der in den Relativpositionen einrastet und die Rohrelementteilstück-Versetzbarkeit blockiert.

10. Verwendung nach einem der vorstehenden Ansprüche, bei welcher das Rohrelement (2) beiderends verschlossen ist, wobei zur Vereinfachung der Rohrelementteilstück-Versetzbarkeit und damit der Längeneinstellung jeweils zwischen zwei Relativpositionen ein Lüftungskanal geöffnet wird.

11. Verwendung nach Anspruch 10, bei welcher ein am zweiten Rohrelementteilstück (24) vorgesehener, nach innen hervortretender Kontaktkragen am ersten Rohrelementteilstück (23) anliegt, wobei eine Kontaktfläche zwischen dem Kontaktkragen (61) und dem ersten Rohrelementteilstück in den Relativpositionen hinsichtlich der Umlaufrichtung durchgehend vorliegt, zwischen den Relativpositionen jedoch zur Ausbildung des Lüftungskanals unterbrochen ist.

12. Verwendung nach Anspruch 11 in Verbindung mit Anspruch 9, bei welcher außenseitig am ersten Rohrelementteilstück (23) eine Lüftungsrille (81) mit einer Erstreckung in Leitungsrichtung (21) vorgesehen ist, nämlich einer Erstreckung in Leitungsrichtung (21) zwischen den Relativpositionen und in diese hinein, wobei die Lüftungsrille (81) die Kontaktfläche zwischen den Relativpositionen unterbricht und den Lüftungskanal mit begrenzt, in den Relativpositionen jedoch der Kontaktkragen am Grund der Lüftungsrille (81) aufliegt, sodass die Kontaktfläche durchgeht.

13. Verwendung nach einem der vorstehenden Ansprüche, bei welcher eine Verdrehsicherung vorgesehen ist, sodass die Rohrelementteilstücke (23, 24) relativ zueinander in Leitungsrichtung (21) versetzbar, jedoch nicht in Umlaufrichtung verdrehbar sind, vorzugsweise ein sich in Leitungsrichtung (21) erstreckender Vorsprung an einem der beiden Rohrelementteilstücke (23, 24), der in einer sich in Leitungsrichtung (21) erstreckenden Führungsrille am anderen der beiden Rohrelementteilstücke (23, 24) geführt ist.

## Claims

1. Use of a duct (1) for an insertion into a wall or floor element and for feeding through a line,
said duct (1) comprising a tube element (2) which is provided for extending through said wall or floor element in a line direction (21), wherein said tube element (2) comprises a first tube element piece (23) and a second tube element piece (24), said tube element pieces (23, 24) being displaceable with respect to each other in said line direction (21) and being arrangeable in a plurality of different relative positions to each other thus, so that a length of said tube element (2), taken in said line direction (21), is adjustable,
wherein said first tube element piece (23) can be inserted into said second tube element piece (24) and is guided therein displaceable to enable said displaceability,
wherein a locking device (26, 32; 51, 61) is provided, which locks said displaceability of said tube element pieces (23, 24) in said relative positions,
wherein a locking ring (26, 91) is provided as said locking device (26, 32; 51, 61), which locking ring can be brought into a locking position for locking said displaceability of said tube element pieces, in which locking position said locking ring (26, 91) defines the relative position of said first (23) and said second tube element piece (24),
wherein pourable material which hardens then encloses said tube element (2) in said use, **characterized in that**, in said locking position, said locking ring tensions said second tube element piece (24) inwards onto said first tube element piece (23).

2. The use according to claim 1, wherein said pourable material which hardens then is concrete or mortar.

3. The use according to claim 1 or 2, wherein said locking ring (91) can be moved into said locking position by a screwing movement, a corresponding screwing guidance (102) being provided on the outside of at least one of said first (23) and said second tube element piece (24).

4. The use according to claim 1 or 2, wherein said locking ring (26) is guided displaceable on the outside of the second tube element piece (24) and can be moved from a position which allows the displaceability of the tube element pieces into a locking position by just moving it in said line direction (21).

5. The use according to claim 3 or 4, wherein an outer surface (31) extends, in a tensioning section (32) of said second tube element piece (24), obliquely outwards with respect to a direction defining a distance to a centre axis of said line so that said locking ring (26) tensions said tensioning section (32) of said second tube element piece (24) increasingly inwards when said locking ring is moved into said locking position.

6. The use according to claim 5, wherein said second tube element piece (24) is partitioned in said locking section (32) by parting lines (41) extending in said line direction (21), namely is partitioned into tensioning tongues (42), said tensioning tongues (42) having a certain mobility in the distance direction and being tensible inwards.

7. The use according to one of the preceding claims, wherein a sealing member (104) sealing between said first (23) and said second tube element piece (24) is tensioned by said locking ring (26, 91), preferably a sealing member (104) guided displaceable at said second tube element piece (24) in a wedge-like manner.

8. The use according to one of the preceding claims, wherein said second tube element piece (24) is partitioned into a tube section and a contact section being one-piece with said tube section, said contact section being adapted for contacting said first tube element piece (23) sealingly, thus being made of a material which is softer than a material of said tube section.

9. The use according to one of the preceding claims, wherein said locking device (26, 32; 51, 61) comprises a catch mechanism which catches in said relative positions and locks said displaceability of said tube element pieces.

10. The use according to one of the preceding claims, wherein said tube element (2) is closed at both ends, wherein a ventilation channel is opened between two relative positions respectively for simplifying said displaceability of said tube element pieces and said length adjustment thus.

11. The use according to claim 10, wherein a contact collar (61) provided at said second tube element piece (24) and projecting inwards contacts said first tube element piece (23), wherein a contact area between said contact collar (61) and said first tube element piece (23) extends continuously with respect to the circumferential direction in said relative positions but is interrupted between said relative positions for forming said ventilation channel.

12. The use according to claim 11 in combination with claim 9, wherein a ventilation groove (81) having an extension in said line direction (21) is provided on the outside of said first tube element piece (23), said ventilation groove (81) extending in said line direction (21) between said relative positions and into the latter, wherein said ventilation groove (81) interrupts said contact area between said relative positions and defines said ventilation channel, and wherein said contact collar lies at the bottom of said ventilation groove (81) in said relative positions so that said contact area extends continuously.

13. The use according to one of the preceding claims, wherein an anti-rotation device is provided so that said tube element pieces (23, 24) can be displaced with respect to each other in said line direction (21) but are not rotatable with respect to each other in a circumferential direction, said anti-rotation device being preferably a projection at one of said two tube element pieces (23, 24), said projection extending in said line direction (21) and being guided in a guiding groove provided at the other one of said two tube element pieces (23, 24), said guiding groove extending in said line direction (21).

## Revendications

1. Utilisation d'un passage (1) destiné à être encastré dans un élément de paroi ou de sol et à guider une conduite,
lequel passage (1) présente un élément tubulaire (2) prévu pour traverser l'élément de paroi ou de sol dans le sens de la conduite (21),
dans laquelle l'élément tubulaire (2) présente un premier tronçon d'élément tubulaire (23) et un deuxième tronçon d'élément tubulaire (24), lesquels tronçons d'élément tubulaire (23, 24) sont mobiles l'un par rapport à l'autre dans le sens de la conduite (21) et peuvent ainsi être disposés dans une pluralité de positions relatives différentes permettant de régler la longueur de l'élément tubulaire (2), prise dans le sens de la conduite (21),
dans laquelle le premier tronçon d'élément tubulaire (23) peut s'emboîter dans le deuxième tronçon d'élément tubulaire (24) et y être ensuite déplacé afin d'assurer sa mobilité,
dans laquelle il est prévu un dispositif de blocage (26, 32 ; 51, 61) bloquant la mobilité des tronçons d'élément tubulaire (23, 24) dans les positions relatives,
dans laquelle le dispositif de blocage (26, 32 ; 51, 61) consiste en une bague de serrage (26, 91) servant à bloquer le déplacement des tronçons d'élément tubulaire en étant mise dans une position de serrage dans laquelle la bague de serrage (26, 91) immobilise le premier (23) et le deuxième tronçon d'élément tubulaire (24) dans leur position relative,
dans laquelle utilisation une matière fluide durcissant par la suite entoure l'élément tubulaire (2), **caractérisée en ce que**, dans la position de serrage, la bague de serrage serre le deuxième tronçon d'élément tubulaire (24) vers l'intérieur en le pressant sur le premier tronçon d'élément tubulaire (23).

2. Utilisation selon la revendication 1, dans laquelle la matière fluide durcissant par la suite est du béton ou du mortier.

3. Utilisation selon la revendication 1 ou 2, dans laquelle la bague de serrage (91) peut passer à la position de serrage selon un mouvement de vissage, aux fins de quoi un guidage hélicoïdal (102) est prévu sur l'extérieur d'au moins un des premier (23) et deuxième (24) tronçons d'élément tubulaire.

4. Utilisation selon la revendication 1 ou 2, dans laquelle la bague de serrage (26) est disposée coulissante sur l'extérieur du deuxième tronçon d'élément tubulaire (24) et peut être déplacée vers la position de serrage, à partir d'une position permettant le déplacement des tronçons d'élément tubulaire, selon un mouvement allant dans le sens de la conduite (21) uniquement.

5. Utilisation selon la revendication 3 ou 4, dans laquelle la surface extérieure (31), dans une section de serrage (32) du deuxième tronçon d'élément tubulaire (24), est inclinée vers l'extérieur par rapport au sens déterminant l'écart avec l'axe médian de la conduite, si bien que la bague de serrage (26) serre la section de serrage (32) du deuxième tronçon d'élément tubulaire (24) de manière croissante vers l'intérieur lors du déplacement de la bague de serrage vers la position de serrage.

6. Utilisation selon la revendication 5, dans laquelle le deuxième tronçon d'élément tubulaire (24) est divisé en languettes de serrage (42) dans la section de serrage (32) par le biais de plans de joint (41) qui s'étendent chacun dans le sens de la conduite (21), lesdites languettes de serrage (42) présentant une certaine mobilité dans le sens de l'écart et pouvant être serrées vers l'intérieur.

7. Utilisation selon l'une des revendications précédentes, dans laquelle la bague de serrage (26, 91) permet de serrer un élément d'étanchéité (104) visant à assurer l'étanchéité entre le premier (23) et le deuxième (24) tronçon d'élément tubulaire, de préférence un élément d'étanchéité (104) semblable à un coin disposé déplaçable au niveau du deuxième tronçon d'élément tubulaire (24).

8. Utilisation selon l'une des revendications précédentes, dans laquelle le deuxième tronçon d'élément tubulaire (24) est subdivisé en une section de tuyau et une section de contact formée d'un seul tenant avec cette dernière, ladite section de contact étant conçue pour venir en appui étanche avec le premier tronçon d'élément tubulaire (23) et se composant à cet effet d'une matière plus souple que celle de la section de tuyau.

9. Utilisation selon l'une des revendications précédentes, dans laquelle le dispositif de blocage (26, 32; 51, 61) présente un mécanisme d'encliquetage (51, 61) qui s'encliquète dans les positions relatives et bloque la mobilité des tronçons d'élément tubulaire.

10. Utilisation selon l'une des revendications précédentes, dans laquelle l'élément tubulaire (2) est obturé des deux côtés, un canal de ventilation étant ouvert pour faciliter la mobilité des tronçons d'élément tubulaire et ainsi leur réglage dans la longueur entre deux positions relatives respectives.

11. Utilisation selon la revendication 10, dans laquelle une collerette de contact présente sur le deuxième tronçon d'élément tubulaire (24) en faisant saillie vers l'intérieur est en contact avec le premier tronçon d'élément tubulaire (23), moyennant quoi une surface de contact entre la collerette de contact (61) et le premier tronçon d'élément tubulaire pénètre dans les positions relatives eu égard au sens circonférentiel, en étant toutefois interrompue entre les positions relatives pour créer le canal de ventilation.

12. Utilisation selon la revendication 11, en liaison avec la revendication 9, dans laquelle il est prévu, à l'extérieur du premier tronçon d'élément tubulaire (23), une rainure de ventilation (81) s'étendant dans le sens de la conduite (21), c'est-à-dire dans le sens de la conduite (21) entre les positions relatives et dans celles-ci, ladite rainure de ventilation (81) interrompant la surface de contact entre les positions relatives et délimitant conjointement le canal de ventilation, dans lesquelles positions relatives la collerette de contact repose toutefois au fond de la rainure de ventilation (81) en assurant une surface de contact traversière.

13. Utilisation selon l'une des revendications précédentes, dans laquelle il est prévu un dispositif anti-torsion permettant aux tronçons d'élément tubulaire (23, 24) d'être mobiles l'un par rapport à l'autre dans le sens de la conduite (21) mais de ne pas pouvoir tourner dans le sens circonférentiel, s'agissant de préférence d'une saillie prévue sur l'un des deux tronçons d'élément tubulaire (23, 24) en s'étendant dans le sens de la conduite (21) et qui s'introduit dans une rainure de guidage orientée dans le sens de la conduite (21) de l'autre des deux tronçons d'élément tubulaire (23, 24).
